# EUROPEAN PATENT APPLICATION

(11) **EP 4 312 397 A1**
(43) Date of publication of application: **31.01.2024**
(21) Application number: 23160027.1
(22) Date of filing: 03.03.2023
(51) Int. Cl.: H04L 9/08

(54) **QKD DEVICE, QKD SYSTEM, QKD START CONTROL METHOD, AND COMPUTER-READABLE MEDIUM**

(30) Priority: 27.07.2022 JP 2022119667
(71) Applicant: KABUSHIKI KAISHA TOSHIBA, Minato-ku Tokyo 105-0023 (JP)
(72) Inventor: TANIZAWA, Yoshimichi, Tokyo, 105-0023 (JP)
(74) Representative: Marks & Clerk LLP

(57) **Abstract**

According to an arrangement, a quantum key distribution (QKD) device (1) includes an authentication processing unit (11) and a start unit (12). The authentication processing unit (11) performs inter-QKD-device connection authentication indicating authentication processing with an opposing QKD device (1), and key manager (KM)-QKD connection authentication indicating authentication processing with an opposing KM device (2). The start unit (12) enables a QKD function in a case where the inter-QKD-device connection authentication is successful and the KM-QKD connection authentication is successful.

## Description

### FIELD

Arrangements described herein relate generally to a quantum key distribution (QKD) device, a QKD system, a QKD start control method, and a computer-readable medium.

### BACKGROUND

Hitherto, a quantum key distribution (QKD) technology for securely sharing a cryptographic key by using a single photon continuously transmitted between a transmission device and a reception device connected by an optical fiber has been known. It is ensured, based on the principle of quantum mechanics, that the cryptographic key generated and shared by the quantum key distribution (QKD) technology is not wiretapped.

### BRIEF DESCRIPTION OF THE DRAWINGS

Fig. 1 is a diagram illustrating a first example of a device configuration of a quantum key distribution (QKD) system according to an arrangement;
Fig. 2 is a diagram for explaining functions of a management system according to the arrangement;
Fig. 3 is a diagram illustrating a second example of the device configuration of the QKD system according to the arrangement;
Fig. 4 is a diagram illustrating an example of a functional configuration of a QKD device according to the arrangement;
Fig. 5 is a sequence diagram illustrating an example of QKD device-management system connection authentication according to the arrangement;
Fig. 6 is a sequence diagram illustrating an example of key manager (KM)-QKD connection authentication according to the arrangement;
Fig. 7 is a sequence diagram illustrating a first example of inter-QKD-device connection authentication according to the arrangement;
Fig. 8 is a sequence diagram illustrating a second example of the inter-QKD-device connection authentication according to the arrangement; and
Fig. 9 is a diagram illustrating an example of a hardware configuration of the QKD device according to the arrangement.

### DETAILED DESCRIPTION

According to an arrangement, a quantum key distribution (QKD) device includes an authentication processing unit and a start unit. The authentication processing unit performs inter-QKD-device connection authentication indicating authentication processing with an opposing QKD device, and key manager (KM)-QKD connection authentication indicating authentication processing with an opposing KM device. The start unit enables a QKD function in a case where the inter-QKD-device connection authentication is successful and the KM-QKD connection authentication is successful.

Exemplary arrangements of a quantum key distribution (QKD) device, a QKD system, a QKD start control method, and a computer-readable medium will be explained below in detail with reference to the accompanying drawings.

### First Arrangement

Key sharing by QKD has a limited communicable distance in principle, and only one-to-one key sharing can be used. A key manager (KM) device is introduced in addition to the QKD device, and the KM device holds and manages the key and is configured to relay the key, whereby a QKD network can be configured. As a result, in a network in which the QKD is used as a link and the KM device is used as a node, cryptographic key sharing between arbitrary two bases can be realized (see JP 2016-171530 A and ITU-T Y.3800, (online), (searched on May 20, 2022),
Internet<URL:https://www.itu.int/rec/T-REC-Y.3800/en>).

The shared cryptographic key is provided from the KM device to an external application and used. The QKD device and the KM device may be integrally realized by, for example, one housing.

### Example of Device Configuration

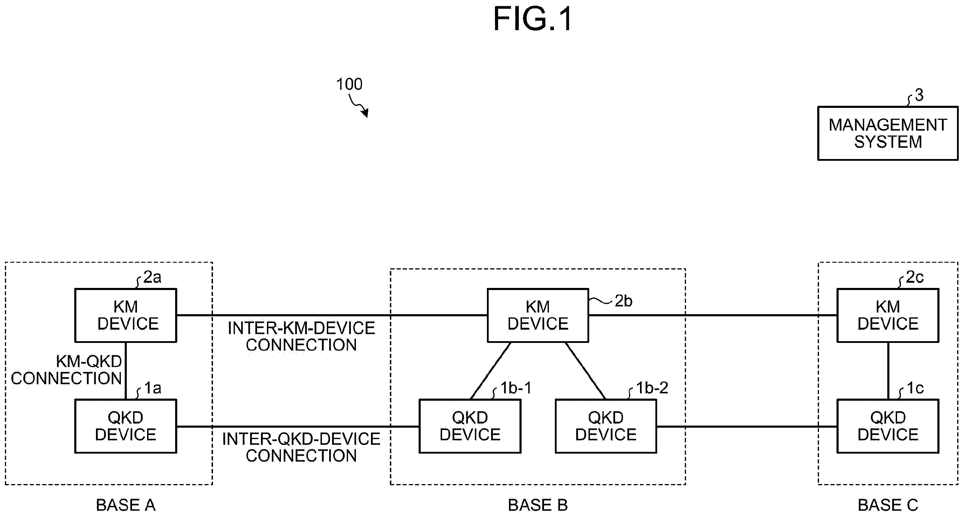

Fig. 1 is a diagram illustrating a first example of a device configuration of a quantum key distribution (QKD) system 100 according to an arrangement. The QKD system 100 according to the arrangement includes QKD devices 1a to 1c, KM devices 2a to 2c, and a management system 3. In a case where the QKD devices 1a to 1c are not distinguished from each other, the QKD devices 1a to 1c are simply referred to as QKD device 1. Similarly, in a case where the KM devices 2a to 2c are not distinguished from each other, the KM devices 2a to 2c are simply referred to as KM device 2.

The QKD device 1 executes a QKD protocol with the opposing QKD device 1 by QKD as described above to generate a cryptographic key. The cryptographic key is provided to the KM device 2.

The KM device 2 receives the cryptographic key from at least one QKD device 1. The KM device 2 holds and manages the cryptographic key and relays the cryptographic key between the KM devices 2, thereby realizing cryptographic key sharing between arbitrary KM devices 2. Note that details of the relaying are described in JP 2016-171530 A, ITU-T Y.3800, (online), (searched on May 20, 2022), Internet<URL:https://www.itu.int/rec/T-REC-Y.3800/en>, and the like.

The management system 3 manages a state and a configuration of the QKD network configured by the QKD device 1 and the KM device 2.

Bases A to C are places where the QKD devices 1 and the KM devices 2 are installed. Nodes implemented by the QKD device 1 and the KM device 2 may be referred to as trusted nodes. The bases A to C are assumed to be sections in which physical safety is ensured, thereby ensuring security in storage and relaying of the cryptographic key.

Note that an application using the cryptographic key is connected to the KM device 2, receives the cryptographic key from the KM device 2, and performs cryptographic communication by using the cryptographic key. In many cases, the application is installed in the bases A to C.

In addition, the management system 3 is generally installed in an independent base (trusted node) or installed in any base (for example, the base C or the like in the example of Fig. 1).

Inter-QKD-device connection, inter-KM-device connection, and KM-QKD connection necessary for proper connection and operation of the QKD system 100 will be described.

The inter-QKD-device connection is connection between the QKD devices 1, and the QKD protocol is executed by the inter-QKD-device connection to generate the cryptographic key. The QKD device 1 generally includes a transmitter that transmits photons and a receiver that receives photons, and operates by a specific pair. It is necessary to operate a correct QKD device with a correct pair configuration.

The inter-KM-device connection is, for example, connection used by the KM device 2 to verify the cryptographic key acquired from the QKD device 1. For example, connection between the KM devices 2 is connection used to perform key relaying using the cryptographic key. Since the KM device 2 handles cryptographic key data, the KM device 2 itself needs to be legitimate. It is also important that the connection is intended by the KM devices 2.

The KM-QKD connection is connection used when the cryptographic key generated by the QKD device 1 is provided to the KM device 2. At the same time, the KM-QKD connection may be used by the KM device 2 (or another management entity via the KM device 2) to grasp a situation of the QKD device 1. The KM device 2 holds, manages, relays, provides, and erases the cryptographic key generated by the QKD device 1. Therefore, the KM device 2 and the QKD device 1 need to be legitimate devices, and it is also important that the QKD device 1 paired with the KM device 2 is the intended QKD device 1.

In addition to the fact that each of the inter-QKD-device connection, the inter-KM-device connection, and the KM-QKD connection needs to be legitimate, a relationship therebetween is also important. Usually, it is necessary that a pair of QKD devices 1 that have the inter-QKD-device connection are connected to the KM devices 2 in the inter-KM-device connection relationship, and operates in such a way as to provide the same cryptographic key to the KM devices 2 in the inter-KM-device connection relationship.

For example, in the example of Fig. 1, the QKD device 1a and the QKD device 1b-1 have the intra-QKD-device connection. The QKD device 1a and the KM device 2a are in the KM-QKD connection relationship. The QKD device 1b-1 and the KM device 2b are in the KM-QKD connection relationship. The KM device 2a and the KM device 2b have the intra-KM-device connectionp. As described above, a state in which the QKD devices 1a and 1b-1 and the KM devices 2a and 2b are connected in a "quadrangular relationship" by the inter-QKD-device connection, the KM-QKD connection (between the QKD device 1b-1 and the KM device 2b), the inter-KM-device connection, and the KM-QKD connection (between the KM device 2a and the QKD device 1a) is a state of a correct connection relationship.

In the QKD system 100 according to the arrangement illustrated in Fig. 1 described above, it is important to ensure security. Therefore, even in the introduction (or replacement) of the QKD device 1, it is required to confirm that the QKD device 1 is a valid device and that valid setting has been made for the QKD device 1 through a valid procedure, to ensure that appropriate QKD devices 1 are connected, and then to operate the QKD device 1.

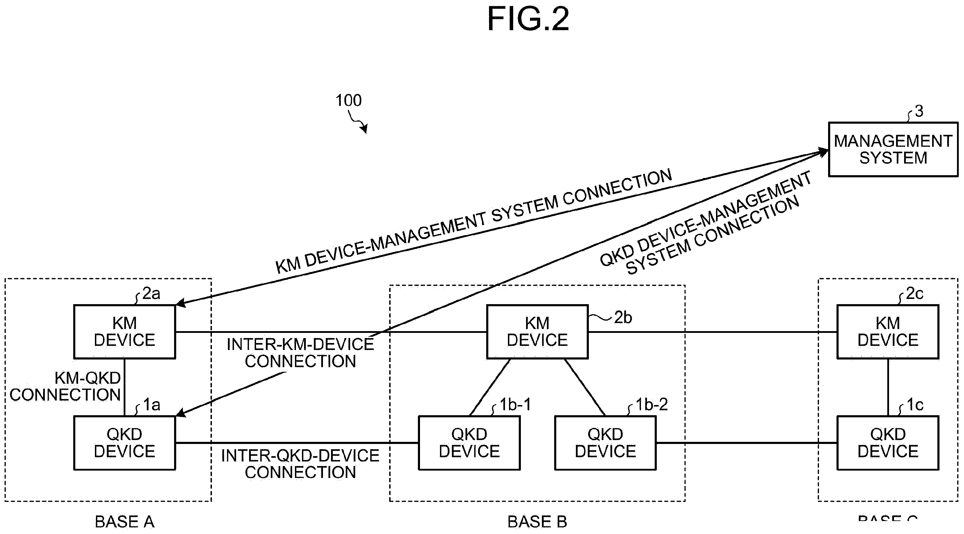

Next, connection including the management system 3 will be described with reference to Fig. 2.

Fig. 2 is a diagram for explaining functions of the management system 3 according to the arrangement. The management system 3 according to the arrangement generally performs state monitoring, setting, and the like of the QKD device 1 and the KM device 2. When the QKD device 1 is connected to the management system 3, the management system 3 confirms that the QKD device 1 is legitimate. Similarly, when the KM device 2 is connected to the management system 3, the management system 3 confirms that the KM device 2 is legitimate. The management system 3 verifies the validity of the QKD device 1 and the KM device 2 and the correctness of the setting and determines an operation permission for the QKD device 1 and the KM device 2 according to the verification result. In other words, the management system 3 activates the QKD device 1 and the KM device 2.

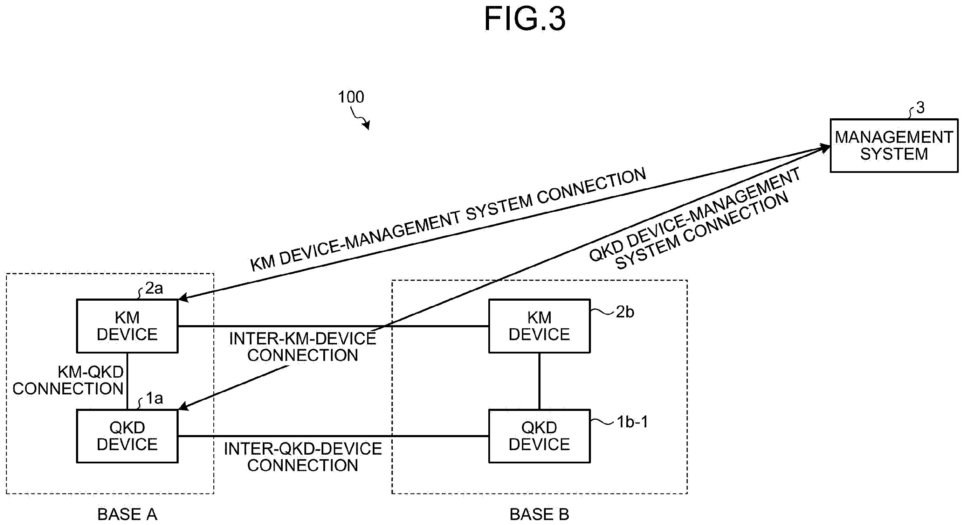

Note that the configuration of the QKD system 100 according to the arrangement is not limited to the example of Fig. 1. Fig. 3 is a diagram illustrating a second example of the device configuration of the QKD system 100 according to the arrangement. In the second example of Fig. 3, the base C is not included, and the form of the system is further simplified.

In other words, connection relationships included in the system configuration of the QKD system 100 according to the arrangement are as follows, and authentication for ensuring security is required for each connection relationship.
- Inter-QKD-device connection authentication
- Inter-KM-device connection authentication
- KM-QKD connection authentication
- QKD device-management system connection authentication
- KM device-management system connection authentication

In the description of the arrangement, authentication directly related to the QKD device 1 (inter-QKD-device connection authentication, KM-QKD connection authentication, and QKD device-management system connection authentication) will be described in detail.

### Example of Functional Configuration

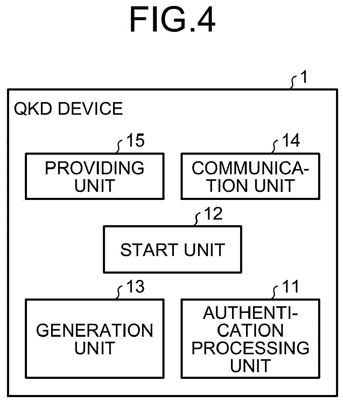

Fig. 4 is a diagram illustrating an example of a functional configuration of the QKD device 1 according to the arrangement. The QKD device 1 according to the arrangement includes an authentication processing unit 11, a start unit 12, a generation unit 13, a communication unit 14, and a providing unit 15.

The authentication processing unit 11 performs processing for realizing an authentication function directly related to the QKD device 1. Note that details of the processing for the authentication function will be described later.

The start unit 12 performs control to enable a QKD function of the QKD device 1 according to the authentication result of the authentication processing unit 11. The QKD function includes at least one of a function of generating the cryptographic key by the QKD, and a function of providing the cryptographic key to the KM device 2.

A method of enabling the function of the QKD device 1 includes, for example, the following variations (1) to (4), but any method may be used.
(1) Starting a synchronization operation between the QKD devices 1 (for example, between the QKD devices 1a and 1b-1) necessary for the operation of the QKD device 1
(2) Starting quantum channel operation, that is, transmission/reception of photons
(3) Changing a key compression ratio in key distillation processing to a non-zero value to output a non-zero-sized key (that is, before authentication, the key distillation processing of the QKD is performed, but key generation is not performed by setting the key compression ratio to zero).
(4) Starting a function of providing the key to the KM device 2.

The generation unit 13 generates the cryptographic key (quantum key) by the quantum key distribution, and realizes a so-called QKD protocol function. The generation unit 13 generates the cryptographic key by the QKD with the opposing QKD device 1 verified to be valid by the inter-QKD-device connection authentication.

The communication unit 14 has a communication function for realizing the QKD function. For example, the communication unit 14 performs transmission and reception of photons used for the quantum key distribution, transmission and reception of control information in the key distillation processing, and the like with the opposing QKD device 1. For example, the communication unit 14 performs communication or the like for providing the cryptographic key (quantum key) to the KM device 2. Furthermore, for example, the communication unit 14 performs communication or the like for transmitting the state of the QKD network to the management system 3.

The providing unit 15 provides the cryptographic key generated by the QKD to the KM device 2. The providing unit 15 is realized by using a part of the functions of the communication unit 14. The providing unit 15 provides the cryptographic key to the opposing KM device 2 verified to be valid by the KM-QKD connection authentication.

### Basic Operation Step of Authentication Processing

Next, Variations A to C of a basic authentication operation step (authentication (or activation/validation) when the QKD device 1 is introduced) in the QKD system 100 according to the arrangement will be described.
A. In a case where the inter-QKD-device connection authentication and the KM-QKD connection authentication are performed and it is confirmed that both of the authentications are successful, the QKD function is activated. That is, in Variation A, the authentication processing unit 11 performs the inter-QKD-device connection authentication indicating authentication processing with the opposing QKD device 1 and the KM-QKD connection authentication indicating authentication processing with the opposing KM device 2. Then, in a case where the inter-QKD-device connection authentication is successful and the KM-QKD connection authentication is successful, the start unit 12 enables the QKD function.
A-2: In a case where the inter-QKD-device connection authentication is performed and it is confirmed that the authentication is successful, the KM-QKD connection authentication including the authentication success information is performed, and in a case where it is confirmed that the authentication is successful, the QKD function is activated. Variation A-2 corresponds to activation of the QKD device 1 in the KM device 2, which is also validation of inter-QKD-device connection and validation of KM-QKD connection.
A-3: In a case where the KM-QKD connection authentication is performed and it is confirmed that the authentication is successful, the inter-QKD-device connection authentication including the authentication success information is performed, and in a case where it is confirmed that the authentication is successful, the QKD function is activated. Variation A-3 corresponds to activation in the opposing QKD device 1, which is also validation of the KM-QKD connection.
B. When the inter-QKD-device connection authentication, the KM-QKD connection authentication, and the QKD device-management system connection authentication are performed and it is confirmed that all the authentications are successful, the QKD function is activated.
B-2. In a case where the inter-QKD-device connection authentication and the KM-QKD connection authentication are performed and it is confirmed that both of the authentications are successful, the QKD device-management system connection authentication including the authentication success information is performed, and in a case where it is confirmed that the authentication is successful, the QKD function is activated. That is, in Variation B-2, in a case where the inter-QKD-device connection authentication is successful and the KM-QKD connection authentication is successful, the communication unit 14 transmits, to the management system 3, a request for the QKD device-management system connection authentication indicating authentication processing with the management system 3 that manages the QKD system 100. Then, in a case where it is mutually verified that the QKD device is valid and the management system 3 is valid by the QKD device-management system connection authentication, the start unit 12 enables the QKD function. Variation B-2 corresponds to activation in the management system 3, which is also validation of the inter-QKD-device connection and the KM device-QKD device connection.
C. In a case where the QKD device-management system connection authentication is performed and it is confirmed that the authentication is successful, the inter-QKD-device connection authentication and the KM-QKD connection authentication are performed according to permission of the management system 3. In a case where it is confirmed that both the inter-QKD-device connection authentication and the KM-QKD connection authentication are successful, the QKD function is activated. That is, in Variation C, the communication unit 14 transmits a request for the QKD device-management system connection authentication to the management system 3. Then, in a case where the QKD device-management system connection authentication is successful, the authentication processing unit 11 performs the inter-QKD-device connection authentication and the KM-QKD connection authentication. Variation C corresponds to a case where the management system 3 first performs activation and validation of the introduced QKD device 1.

In addition to Variations A to C described above, there are various variations in the order of authentication to be performed, an entity performing the activation, a connection relationship to be a validation target, and the like, but any combination may be used.

Hereinafter, an example of a processing step for each authentication will be described in detail.

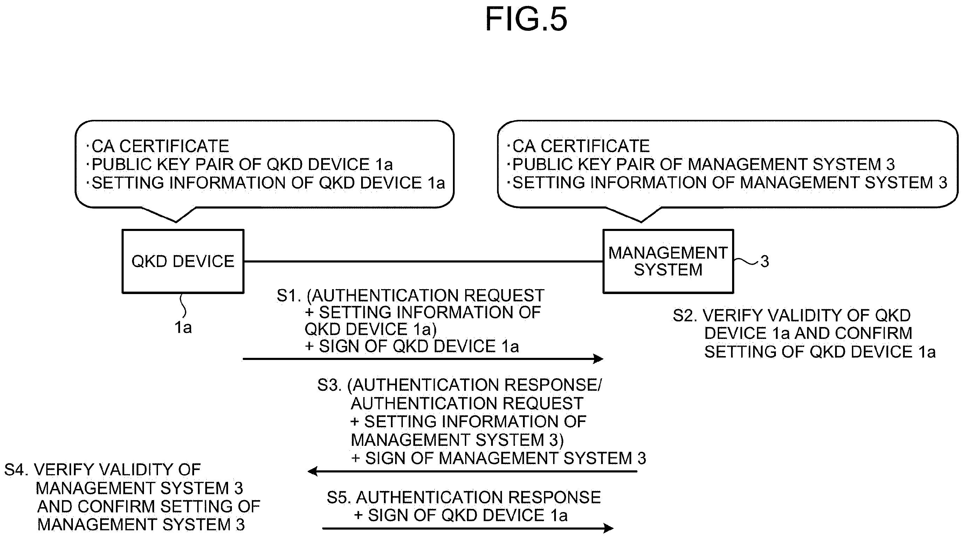

QKD Device-Management System Connection Authentication Fig. 5 is a sequence diagram illustrating an example of the QKD device-management system connection authentication according to the arrangement. The example of Fig. 5 illustrates a case of an authentication sequence executed between the QKD device 1a and the management system 3. It is assumed that the QKD device 1a holds a certificate authority (CA) certificate, a public key/private key pair of the QKD device 1a, and setting information. It is assumed that the management system 3 holds a CA certificate, a public key/private key pair of the management system 3, and setting information.

First, the communication unit 14 of the QKD device 1a transmits an authentication request to the management system 3 (step S1). At this time, the authentication request may include the setting information of the QKD device 1a. The setting information of the QKD device 1a includes a QKD protocol of the QKD device 1a, mounting information, manufacturer information, customer identifier (ID) information, IP address setting, installation position information, an operation parameter, a performance index, IP address setting of the KM device 2 that provides the cryptographic key, previous authentication information, certificate information of the QKD device 1a, and the like.

Note that the performance index is, for example, an assumed key distribution speed (key generation speed). In addition, for example, in a case where the QKD is already operating, the performance index may be an actual key distribution speed.

As for the authentication result, if connection of the QKD device 1a to the QKD device 1b-1 or the KM device 2a has already been authenticated, authentication result information indicating the authentication may be added to the authentication request.

In addition, an authentication request message may be added with sign information indicating that the authentication request is signed by the QKD device 1a and is not falsified and that it is guaranteed that the authentication request has been transmitted by the legitimate QKD device 1a.

Next, the management system 3 performs authentication of the QKD device 1a (step S2). For example, in the authentication in step S2, it is verified whether or not the QKD device 1a is a legitimate device having a valid certificate. Further, for example, in the authentication in step S2, it is verified whether or not the setting of the QKD device 1a is allowed. Note that the management system 3 may hold the allowable setting information of the QKD device 1a in advance. In addition, for example, in the authentication in step S2, it is verified whether or not the QKD device 1a has completed authentication (for example, the KM-QKD connection authentication or the like) to be completed in advance. In addition, for example, in the authentication in step S2, it is verified whether or not the KM device 2 that is a connection authentication destination of the QKD device 1a is the KM device 2a (it may also be separately verified whether or not the above-described "quadrangular relationship" can be confirmed with reference to the information held by the management system 3). Furthermore, for example, in the authentication in step S2, since the setting information of the QKD device 1a also includes the performance index, whether or not the authentication can be performed may be determined based on the sufficiency of performance.

Next, the management system 3 transmits an authentication response (the authentication processing result of step S2)/authentication request to the QKD device 1a (step S3). At this time, the authentication response/authentication request may include the setting information of the management system 3.

The setting information of the management system 3 includes a management protocol supported by the management system 3, mounting information, manufacturer information, customer ID information, IP address setting, installation position information, network information, configuration, and the like. Examples of the network information include a domain name system (DNS), a network time protocol (NTP), QKD network (QKDN) setting, and the like.

The authentication response/authentication request may include setting information instructing the QKD device 1a to perform setting. Examples of the setting information instructing the QKD device 1a to perform setting include setting information (for example, IP address setting, an operation parameter, IP address setting of the KM device 2a that provides the cryptographic key, and the like) to be set by the QKD device 1a.

Furthermore, in a case where it is not verified in the authentication of step S2 that the QKD device 1a is connected to the KM device 2a, the authentication response/authentication request may include information instructing the QKD device 1a to be connected to the KM device 2a or instructing the QKD device 1a to perform authentication of connection to the KM device 2a.

In addition, an authentication response/authentication request message may be added with sign information indicating that the authentication response/authentication request is signed by the management system 3 and is not falsified and that it is guaranteed that the authentication response/authentication request has been transmitted by the legitimate management system 3.

Next, the authentication processing unit 11 of the QKD device 1a performs authentication of the management system 3 (step S4). For example, in the authentication in step S4, it is verified whether or not the management system 3 is a legitimate device having a valid certificate. In addition, for example, in the verification in step S4, it is verified whether or not the setting of the management system 3 is allowable (whether or not network information (setting) of the management system 3 is appropriate). The authentication processing unit 11 may perform the authentication in step S4 after verifying whether or not the setting information indicated by the management system 3 for the QKD device 1a is allowable.

Next, the communication unit 14 transmits an authentication response (the authentication processing result of step S4) to the management system 3 (step S5). An authentication response message may be added with sign information indicating that the authentication request is signed by the QKD device 1a and is not falsified and that it is guaranteed that the authentication request has been transmitted by the legitimate QKD device 1a.

In a case where the QKD device-management system connection authentication in steps S1 to S5 is successful, the QKD device 1a performs any one or more of the following processings (1) to (3).
(1) The QKD device 1a reflects the setting indicated by the management system 3.
(2) The authentication processing unit 11 of the QKD device 1a starts connection authentication (the KM-QKD connection authentication or the like) required to be executed next in both a case where the connection authentication is indicated by the management system 3 and a case where the connection authentication is not indicated by the management system 3.
(3) The start unit 12 of the QKD device 1a enables the function of the QKD device 1a.

In a case where the QKD device-management system connection authentication in steps S1 to S5 described above fails, the QKD device 1a (temporarily) stops the operation, and takes a measure such as making a notification of an abnormality by a log or an alarm.

Meanwhile, the management system 3 records the authentication result in a log or the like.

### KM-QKD Connection Authentication

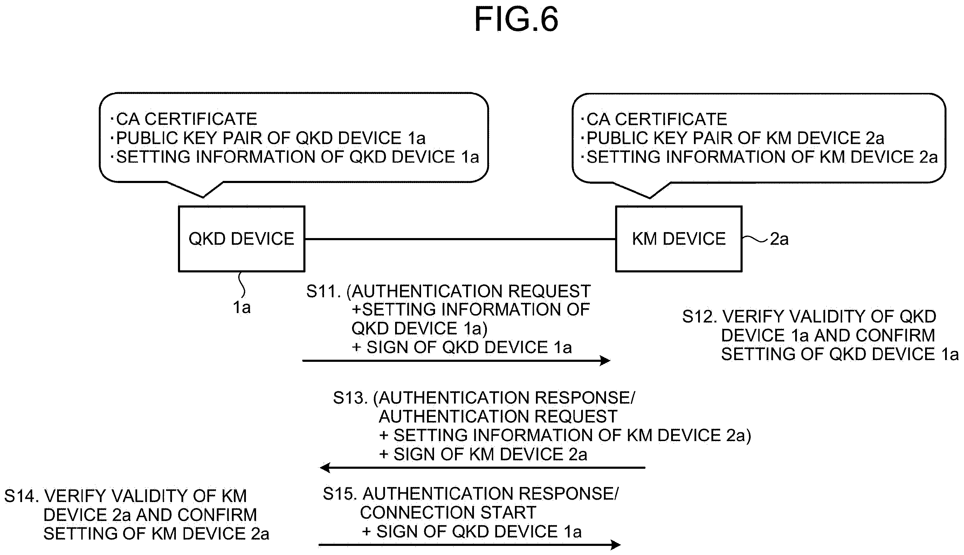

Fig. 6 is a sequence diagram illustrating an example of KM-QKD connection authentication according to the arrangement. The example of Fig. 6 illustrates a case of an authentication sequence executed between the QKD device 1a and the KM device 2a. It is assumed that the QKD device 1a holds a CA certificate, a public key/private key pair of the QKD device 1a, and setting information. It is assumed that the KM device 2a holds a CA certificate, a public/private key pair of the KM device 2a, and setting information.

First, the communication unit 14 of the QKD device 1a transmits an authentication request to the KM device 2a (step S11). At this time, the authentication request may include the setting information of the QKD device 1a.

The setting information of the QKD device 1a includes the QKD protocol of the QKD device 1a, the mounting information, the manufacturer information, the customer ID information, the IP address setting, the installation position information, the operation parameter, the performance index, information of the opposing QKD device 1b-1 that has the inter-QKD-device connection, and the like. Examples of the information of the opposing QKD device 1b-1 that has the inter-QKD-device connection include ID information, address information, setting information, and the like of the opposing QKD device 1b-1.

Note that the inter-QKD-device connection with the opposing QKD device 1b-1 may or does not have to be completed at the time of step S11.

As for the authentication result, if connection of the QKD device 1a to the QKD device 1b-1 or the management system 3 has already been authenticated, authentication result information indicating the authentication may be added to the authentication request.

In addition, an authentication request message may be added with sign information indicating that the authentication request is signed by the QKD device 1a and is not falsified and that it is guaranteed that the authentication request has been transmitted by the legitimate QKD device 1a.

Next, the KM device 2a performs authentication of the QKD device 1a (step S12). For example, in the authentication in step S12, it is verified whether or not the QKD device 1a is a legitimate device having a valid certificate. Further, for example, in the authentication in step S12, it is verified whether or not the setting of the QKD device 1a is allowed. Note that the KM device 2a may hold the allowable setting information of the QKD device 1a in advance. In addition, for example, in the authentication in step S12, it is verified whether or not the QKD device 1a has completed authentication (for example, the inter-QKD-device connection authentication or the like) to be completed in advance.

Further, for example, in the authentication in step S12, it is verified whether or not a QKD device 1 that is a connection authentication destination of the QKD device 1a is the QKD device 1b-1. Note that it may also be separately verified whether or not the above-described "quadrangular relationship" can be confirmed with reference to the information held by the KM device 2a. In a case where the normal "quadrangular relationship" is maintained, the QKD device 1b-1 for which the QKD device 1a performs the inter-QKD-device connection authentication performs the KM-QKD connection authentication with the KM device 2b for which the KM device 2a performs the inter-KM-device connection authentication.

In addition, for example, in the authentication in step S12, since the setting information of the QKD device 1a also includes the performance index, whether or not the authentication can be performed may be determined based on the sufficiency of the performance of the QKD device 1a.

Note that along with the authentication in step S12, the KM device 2a may perform authentication by communicating with an external device (for example, the management system 3) as necessary.

Next, the KM device 2a transmits an authentication response (the authentication processing result of step S12)/authentication request to the QKD device 1a (step S13). At this time, the authentication response/authentication request may include the setting information of the KM device 2a.

The setting information of the KM device 2a includes a KM protocol, mounting information, manufacturer information, customer ID information, IP address setting, installation position information, key storage capacity (for example, a current value and a maximum storage value), KM setting, connection application information, information (for example, an ID, setting, a sign, and the like) of the QKD device (transmitter/receiver) that is in the KM-QKD connection relationship, information (for example, an ID, setting, a sign, and the like) of the KM device 2b that is in the inter-KM-device connection relationship, and the like.

The authentication response/authentication request may include setting information instructing the QKD device 1a to perform setting. The description of the setting information for instructing the QKD device 1a to perform setting is similar to that in Fig. 5, and thus is omitted.

In addition, an authentication response/authentication request message may be added with sign information indicating that the authentication response/authentication request is signed by the KM device 2a and is not falsified and that it is guaranteed that the authentication response/authentication request has been transmitted by the legitimate KM device 2a.

Next, the authentication processing unit 11 of the QKD device 1a performs authentication of the KM device 2a (step S14). For example, in the authentication in step S14, it is verified whether or not the KM device 2a is a legitimate device having a valid certificate. Furthermore, for example, in the authentication in step S14, it is verified whether or not the setting of the KM device 2a is allowable (whether or not network information (setting) of the KM device 2a is appropriate).

The authentication processing unit 11 may perform the authentication in step S14 after verifying whether or not the setting information indicated by the KM device 2a for the QKD device 1a is allowable. For example, the authentication processing unit 11 may reject the connection in a case where the KM protocol, the mounting information, the manufacturer information, or the customer ID information indicated by the KM device 2a for the QKD device 1a is different.

Furthermore, for example, at the time of authentication in step S14, the authentication processing unit 11 may set again information regarding the amount and frequency of the cryptographic key provided from the QKD device 1a to the KM device 2a in light of the information of the key storage capacity, or may reject the connection in light of the information of the key storage capacity. Further, at the time of authentication in step S14, the authentication processing unit 11 may verify whether or not the KM device 2a has completed authentication (for example, the inter-KM-device connection authentication) to be completed in advance.

Furthermore, for example, in the authentication in step S14, it is verified whether or not a KM device 2 that is a connection authentication destination of the QKD device 1a is the KM device 2a. Note that it may also be separately verified whether or not the above-described "quadrangular relationship" can be confirmed with reference to the information held by the QKD device 1a. For example, it may be verified whether or not the KM device 2b connected to the opposing QKD device 1b-1 and the KM device 2b that has the inter-KM-device connection with the opposing KM device 2a are the same device. For example, the authentication processing unit 11 verifies whether or not the KM devices 2 are the same device based on whether or not the IDs of the KM devices 2 match.

Note that along with the authentication in step S14, the QKD device 1a may perform authentication by communicating with an external device (for example, the management system 3) as necessary.

Next, the communication unit 14 of the QKD device 1a transmits an authentication completion notification (authentication response/connection start) to the KM device 2a (step S15). An authentication completion notification (authentication response/connection start) message may be added with sign information indicating that the authentication request is signed by the QKD device 1a and is not falsified and that it is guaranteed that the authentication request has been transmitted by the legitimate QKD device 1a.

In a case where the KM-QKD connection authentication in steps S11 to S15 is successful, the QKD device 1a performs any one or more of the following processings (1) to (3).
(1) The QKD device 1a reflects the setting indicated by the KM device 2a.
(2) The authentication processing unit 11 of the QKD device 1a starts connection authentication (the inter-QKD-device connection authentication or the like) required to be executed next in both a case where the connection authentication is indicated by the KM device 2a and a case where the connection authentication is not indicated by the KM device 2a.
(3) The start unit 12 of the QKD device 1a enables the function of the QKD device 1a.

In a case where the KM-QKD connection authentication in steps S11 to S15 described above fails, the QKD device 1a (temporarily) stops the operation, and takes a measure such as making a notification of an abnormality by a log or an alarm.

On the other hand, in a case where the KM-QKD connection authentication is successful as a result of the authentication, the KM device 2a performs any one or more of the following processings (1) to (3).
(1) The KM device 2a reflects the setting indicated by the QKD device 1a.
(2) The KM device 2a starts connection authentication (the inter-KM-device connection authentication or the like) required to be executed next in both a case where the connection authentication is indicated by the QKD device 1a and a case where the connection authentication is not indicated by the QKD device 1a.
(3) The KM device 2a enables the function of the KM device 2a.

In a case where the authentication fails, the KM device 2a (temporarily) stops the operation, and takes measures such as making a notification of an abnormality by a log or an alarm.

### Inter-QKD-Device Connection Authentication

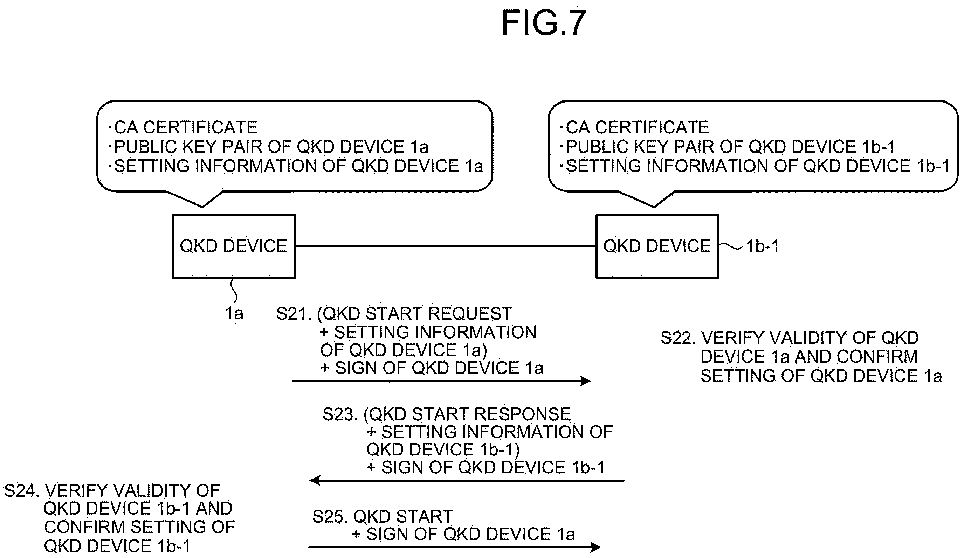

Fig. 7 is a sequence diagram illustrating a first example of the inter-QKD-device connection authentication according to the arrangement. The first example of Fig. 7 illustrates a case of an authentication sequence executed between the QKD device 1a and the QKD device 1b-1. It is assumed that the QKD device 1a holds a CA certificate, a public key/private key pair of the QKD device 1a, and setting information. It is assumed that the QKD device 1b-1 holds a CA certificate, a public/private key pair of the QKD device 1b-1, and setting information.

First, the communication unit 14 of the QKD device 1a transmits an authentication request (QKD start request) to the QKD device 1b-1 (step S21). At this time, the authentication request may include the setting information of the QKD device 1a.

The setting information of the QKD device 1a includes the QKD protocol of the QKD device 1a, the mounting information, the manufacturer information, the customer ID information, the IP address setting, the installation position information, the operation parameter, the performance index, information of the KM device 2a that is in the KM-QKD connection relationship, and the like. Examples of the information of the KM device 2a that is in the KM-QKD connection relationship include ID information, address information, setting information, and the like of the KM device 2a.

Note that the KM-QKD connection with the KM device 2a may or does not have to be completed at the time of step S21.

As for the authentication result, if connection of the QKD device 1a to the KM device 2a or the management system 3 has already been authenticated, authentication result information indicating the authentication may be added to the authentication request.

In addition, an authentication request message may be added with sign information indicating that the authentication request is signed by the QKD device 1a and is not falsified and that it is guaranteed that the authentication request has been transmitted by the legitimate QKD device 1a.

Next, the QKD device 1b-1 performs authentication of the QKD device 1a (step S22). For example, in the authentication in step S22, it is verified whether or not the QKD device 1a is a legitimate device having a valid certificate. Further, for example, in the authentication in step S22, it is verified whether or not the setting of the QKD device 1a is allowed. Note that the QKD device 1b-1 may hold the allowable setting information of the QKD device 1a in advance. In addition, for example, in the authentication in step S22, it is verified whether or not the QKD device 1a has completed authentication (for example, the KM-QKD connection authentication or the like) to be completed in advance.

In addition, for example, in the authentication in step S22, it is verified whether or not the KM device 2 that is a connection authentication destination of the QKD device 1a is the KM device 2a (it may also be separately verified whether or not the above-described "quadrangular relationship" can be confirmed with reference to the information held by the QKD device 1b-1). In a case where the normal "quadrangular relationship" is maintained, the KM device 2a for which the QKD device 1a performs the KM-QKD connection authentication performs the inter-KM-device connection authentication with the KM device 2b for which the QKD device 1b-1 performs the inter-KM-device connection authentication.

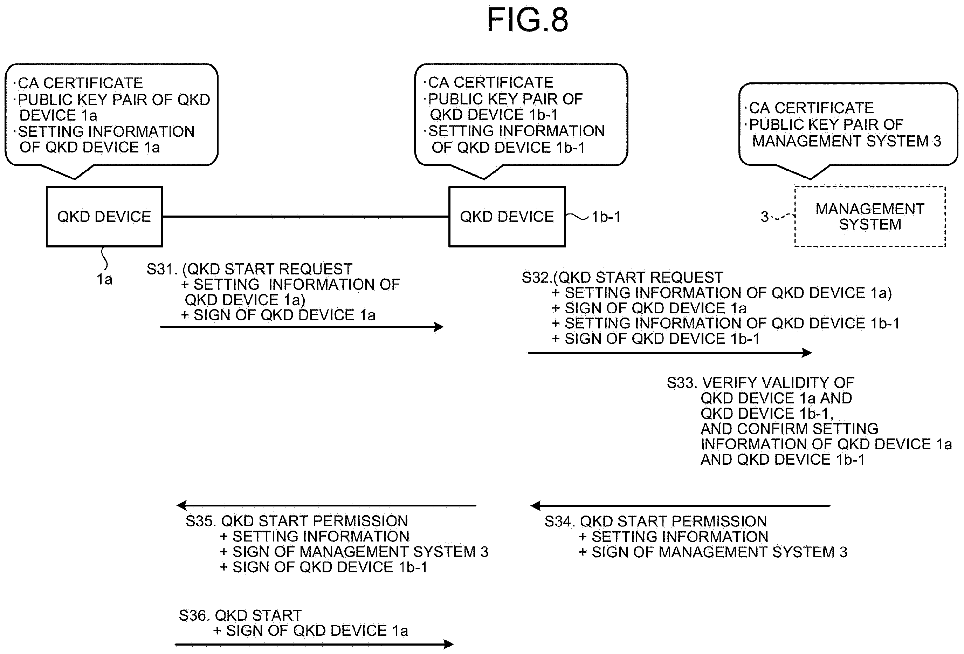

Note that along with the authentication in step S22, the QKD device 1b-1 may perform authentication by communicating with an external device (for example, the management system 3) as necessary. An example of the sequence in this case will be described later with reference to Fig. 8. A method in which an external device (the management system 3 in Fig. 8) collectively manages a network configuration or authentication information between components has an advantage that the above-described "quadrangular relationship" or the like can be easily grasped.

Next, the QKD device 1b-1 transmits a QKD start response (the authentication processing result/authentication request in step S22) to the QKD device 1a (step S23). At this time, the QKD start response may include the setting information of the QKD device 1b-1. Since the setting information of the QKD device 1b-1 is similar to the setting information of the QKD device 1a, a description thereof will be omitted. A QKD start response message may be added with sign information indicating that the authentication request is signed by the QKD device 1b-1 and is not falsified and that it is guaranteed that the authentication request has been transmitted by the legitimate QKD device 1b-1.

Next, the authentication processing unit 11 of the QKD device 1a performs authentication of the QKD device 1b-1 (step S24). A description of step S24 is similar to the processing in which the QKD device 1b-1 performs authentication of the QKD device 1a (step S22), and thus is omitted.

Next, the communication unit 14 of the QKD device 1a transmits a QKD start notification (authentication completion notification) to the QKD device 1b-1 (step S25). A QKD start notification message may be added with sign information indicating that the authentication request is signed by the QKD device 1a and is not falsified and that it is guaranteed that the authentication request has been transmitted by the legitimate QKD device 1a.

In a case where the inter-QKD-device connection authentication in steps S21 to S25 is successful, the QKD device 1a performs any one or more of the following processings (1) to (3).
(1) The QKD device 1a reflects the setting indicated by the QKD device 1b-1.
(2) The authentication processing unit 11 of the QKD device 1a starts connection authentication (the KM-QKD connection authentication or the like) required to be executed next in both a case where the connection authentication is indicated by the QKD device 1b-1 and a case where the connection authentication is not indicated by the QKD device 1b-1.
(3) The start unit 12 of the QKD device 1a enables the function of the QKD device 1a.

In a case where the inter-QKD-device connection authentication in steps S21 to S25 described above fails, the QKD device 1a (temporarily) stops the operation, and takes a measure such as making a notification of an abnormality by a log or an alarm.

The operation of the QKD device 1b-1 after the successful authentication and after the unsuccessful authentication is similar to that of the QKD device 1a.

Note that, in the authentication in step S22 described above, since the setting information of the QKD device 1a also includes, for example, the performance index such as a key distribution speed (key generation speed) assumed in the QKD device 1a, whether or not the authentication can be performed may be determined based on the sufficiency of the performance of the QKD device 1a. In a case of determining whether or not the authentication can be performed based on the sufficiency of the performance, specifically, in step S21, the communication unit 14 transmits a QKD start request including the QKD performance index to the opposing QKD device 1b-1. The authentication processing unit 11 performs processing of verifying the validity of the QKD device 1a and whether or not the QKD performance index is satisfied in the authentication in step S22. Next, in the authentication in step S24, processing of verifying the validity of the opposing QKD device 1b-1 is performed. Then, in a case where it is mutually verified that the QKD devices 1a and 1b-1 are valid and the QKD performance index is satisfied, the authentication processing unit 11 determines that the inter-QKD-device connection authentication is successful (step S25). Note that the processing of verifying whether or not the QKD performance index is satisfied may be performed on the QKD device 1a side in the authentication in step S24. In this case, the QKD device 1a receives the performance index of the QKD device 1b-1 from the opposing QKD device 1b-1.

Fig. 8 is a sequence diagram illustrating a second example of the inter-QKD-device connection authentication according to the arrangement. The second example of Fig. 8 illustrates a case where authentication of the QKD devices 1a and 1b-1 is performed by the management system 3 in step S33. A detailed description of the processing of each of steps S31 to S36 is similar to that of Fig. 7, and thus will be omitted.

As described above, in the QKD device 1 according to the arrangement, the authentication processing unit 11 performs the inter-QKD-device connection authentication indicating the authentication processing with the opposing QKD device 1 and the KM-QKD connection authentication indicating the authentication processing with the opposing KM device 2. Then, in a case where the inter-QKD-device connection authentication is successful and the KM-QKD connection authentication is successful, the start unit 12 enables the QKD function.

As a result, with the QKD device 1 according to the arrangement, the security of the QKD system 100 can be further improved.

Finally, an example of a hardware configuration of the QKD device 1 according to the arrangement will be described.

### Example of Hardware Configuration

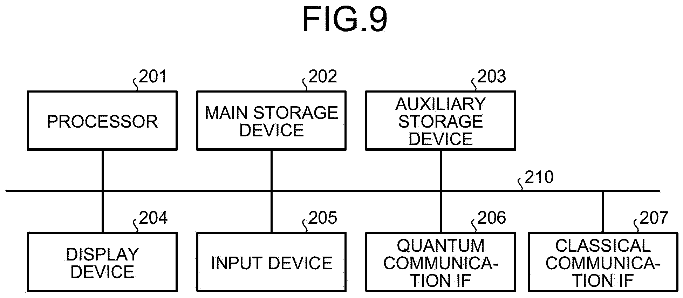

Fig. 9 is a diagram illustrating an example of the hardware configuration of the QKD device 1 according to the arrangement. The QKD device 1 according to the arrangement includes a processor 201, a main storage device 202, an auxiliary storage device 203, a display device 204, an input device 205, a quantum communication IF 206, and a classical communication IF 207. The processor 201, the main storage device 202, the auxiliary storage device 203, the display device 204, the input device 205, the quantum communication IF 206, and the classical communication IF 207 are connected via a bus 210.

The processor 201 executes a program read from the auxiliary storage device 203 to the main storage device 202. The main storage device 202 is a memory such as a read only memory (ROM) and a random access memory (RAM). The auxiliary storage device 203 is a hard disk drive (HDD), a memory card, or the like.

The display device 204 displays the state and the like of the QKD device 1. The input device 205 receives an input from the user. Note that the QKD device 1 does not have to include the display device 204 and the input device 205.

The quantum communication IF 206 is an interface for connection to a quantum cryptographic communication path (optical fiber link). The classical communication IF 207 is an interface for connection to a QKD control signal communication path, the KM device 2, and the like. In a case where the QKD device 1 does not include the display device 204 and the input device 205, for example, a display function and an input function of an external terminal connected via the classical communication IF 207 may be used.

The program executed by the QKD device 1 is an installable or executable file, is stored in a computer-readable storage medium such as a CD-ROM, a memory card, a CD-R, or a digital versatile disc (DVD), and is provided as a computer program product.

Further, the program executed by the QKD device 1 may be stored in a computer connected to a network such as the Internet and may be provided by being downloaded via the network.

Alternatively, the program executed by the QKD device 1 may be provided via a network such as the Internet without being downloaded.

Further, the program executed by the QKD device 1 may be provided by being incorporated in a ROM or the like in advance.

The program executed by the QKD device 1 has a module configuration having a function that can be realized by the program among the functional configurations of the QKD device 1 described above. The processor 201 reads the program from the storage medium such as the auxiliary storage device 203 and executes the program, whereby the function realized by the program is loaded to the main storage device 202. That is, the function realized by the program is generated on the main storage device 202.

Some or all of the functions of the QKD device 1 may be realized by hardware such as an integrated circuit (IC). The IC is, for example, a processor that performs dedicated processing.

Further, in a case of implementing the respective functions using a plurality of processors, each processor may implement one of the functions, or may implement two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

Example 1. A quantum key distribution (QKD) device includes an authentication processing unit, and a start unit. The authentication processing unit performs inter-QKD-device connection authentication indicating authentication processing with an opposing QKD device, and key manager (KM)-QKD connection authentication indicating authentication processing with an opposing KM device. The start unit enables a QKD function in a case where the inter-QKD-device connection authentication is successful and the KM-QKD connection authentication is successful.

Example 2. The QKD device according to Example 1, further includes a communication unit that transmits, to a management system that manages a QKD system, a request for QKD device-management system connection authentication indicating authentication processing with the management system, in a case where the inter-QKD-device connection authentication is successful and the KM-QKD connection authentication is successful. The start unit enables the QKD function in a case where it is mutually verified that the QKD device is valid and the management system is valid by the QKD device-management system connection authentication.

Example 3. The QKD device according to Example 1, further include a communication unit that transmits, to a management system that manages a QKD system, a request for QKD device-management system connection authentication indicating authentication processing with the management system. The authentication processing unit performs the inter-QKD-device connection authentication and the KM-QKD connection authentication in a case where the QKD device-management system connection authentication is successful.

Example 4. In the QKD device according to any one of Examples 1 to 3, the KM-QKD connection authentication includes processing of verifying whether or not a KM device connected to the opposing QKD device and a KM device that has an inter-KM-device connection to the opposing KM device are identical.

Example 5. In the QKD device according to any one of Examples 1 to 3, the QKD function includes at least one of a function of generating a cryptographic key by QKD and a function of providing the cryptographic key to the KM device.

Example 6. The QKD device according to any one of Examples 1 to 3, further includes a communication unit that transmits, to the opposing QKD device, a QKD start request indicating a request for the inter-QKD-device connection authentication. The QKD start request includes a QKD performance index. The inter-QKD-device connection authentication includes processing of mutually verifying validity of the QKD device and validity of the opposing QKD device, and processing of verifying whether or not the QKD performance index is satisfied. The authentication processing unit determines that the inter-QKD-device connection authentication is successful in a case where the validity of the QKD device and the validity of the opposing QKD device are mutually verified and the QKD performance index is satisfied.

Example 7. The QKD device according to any one of Examples 1 to 3, further includes a generation unit and a providing unit. The generation unit generates a cryptographic key by QKD with the opposing QKD device verified to be valid by the inter-QKD-device connection authentication. The providing unit provides the cryptographic key to the opposing KM device verified to be valid by the KM-QKD connection authentication.

Example 8. A quantum key distribution (QKD) system includes a plurality of QKD devices, and a plurality of key manager (KM) devices. Each of the plurality of QKD devices includes an authentication processing unit, and a start unit. The authentication processing unit performs inter-QKD-device connection authentication indicating authentication processing with an opposing QKD device, and KM-QKD connection authentication indicating authentication processing with an opposing KM device. The start unit enables a QKD function in a case where the inter-QKD-device connection authentication is successful and the KM-QKD connection authentication is successful.

Example 9. A quantum key distribution (QKD) start control method includes: performing, by a QKD device, inter-QKD-device connection authentication indicating authentication processing with an opposing QKD device, and key manager (KM)-QKD connection authentication indicating authentication processing with an opposing KM device; and enabling, by the QKD device, a QKD function in a case where the inter-QKD-device connection authentication is successful and the KM-QKD connection authentication is successful.

Example 10. A computer-readable medium includes instructions which, when executed by a compute of a quantum key distribution (QKD) device, cause the computer to function as an authentication processing unit and a start unit. The authentication processing unit performs inter-QKD-device connection authentication indicating authentication processing with an opposing QKD device, and key manager (KM)-QKD connection authentication indicating authentication processing with an opposing KM device. The start unit enables a QKD function in a case where the inter-QKD-device connection authentication is successful and the KM-QKD connection authentication is successful.

## Claims

1. A quantum key distribution (QKD) device (1) comprising:
an authentication processing unit (11) that performs inter-QKD-device connection authentication indicating authentication processing with an opposing QKD device (1), and key manager (KM)-QKD connection authentication indicating authentication processing with an opposing KM device (2); and
a start unit (12) that enables a QKD function in a case where the inter-QKD-device connection authentication is successful and the KM-QKD connection authentication is successful.

2. The QKD device (1) according to claim 1, further comprising
a communication unit (14) that transmits, to a management system (3) that manages a QKD system (100), a request for QKD device-management system connection authentication indicating authentication processing with the management system (3), in a case where the inter-QKD-device connection authentication is successful and the KM-QKD connection authentication is successful,
wherein the start unit (12) enables the QKD function in a case where it is mutually verified that the QKD device (1) is valid and the management system (3) is valid by the QKD device-management system connection authentication.

3. The QKD device (1) according to claim 1, further comprising
a communication unit (14) that transmits, to a management system (3) that manages a QKD system (100), a request for QKD device-management system connection authentication indicating authentication processing with the management system (3),
wherein the authentication processing unit (11) performs the inter-QKD-device connection authentication and the KM-QKD connection authentication in a case where the QKD device-management system connection authentication is successful.

4. The QKD device (1) according to any one of claims 1 to 3,
wherein the KM-QKD connection authentication includes processing of verifying whether or not a KM device (2) connected to the opposing QKD device (1) and a KM device (2) that has an inter-KM-device connection to the opposing KM device (2) are identical.

5. The QKD device (1) according to any one of claims 1 to 3,
wherein the QKD function includes at least one of a function of generating a cryptographic key by QKD and a function of providing the cryptographic key to the KM device (2).

6. The QKD device (1) according to any one of claims 1 to 3, further comprising
a communication unit (14) that transmits, to the opposing QKD device (1), a QKD start request indicating a request for the inter-QKD-device connection authentication, wherein
the QKD start request includes a QKD performance index,
the inter-QKD-device connection authentication includes processing of mutually verifying validity of the QKD device (1) and validity of the opposing QKD device (1), and processing of verifying whether or not the QKD performance index is satisfied, and
the authentication processing unit (11) determines that the inter-QKD-device connection authentication is successful in a case where the validity of the QKD device (1) and the validity of the opposing QKD device (1) are mutually verified and the QKD performance index is satisfied.

7. The QKD device (1) according to any one of claims 1 to 3, further comprising:
a generation unit (13) that generates a cryptographic key by QKD with the opposing QKD device (1) verified to be valid by the inter-QKD-device connection authentication; and
a providing unit (15) that provides the cryptographic key to the opposing KM device (2) verified to be valid by the KM-QKD connection authentication.

8. A quantum key distribution (QKD) system comprising:
a plurality of QKD devices (1); and
a plurality of key manager (KM) devices (2), wherein
each of the plurality of QKD devices (1) includes:
an authentication processing unit (11) that performs inter-QKD-device connection authentication indicating authentication processing with an opposing QKD device (1), and KM-QKD connection authentication indicating authentication processing with an opposing KM device (2); and
a start unit (12) that enables a QKD function in a case where the inter-QKD-device connection authentication is successful and the KM-QKD connection authentication is successful.

9. A quantum key distribution (QKD) start control method comprising:
performing, by a QKD device (1), inter-QKD-device connection authentication indicating authentication processing with an opposing QKD device (1), and key manager (KM)-QKD connection authentication indicating authentication processing with an opposing KM device (2); and
enabling, by the QKD device (1), a QKD function in a case where the inter-QKD-device connection authentication is successful and the KM-QKD connection authentication is successful.

10. A computer-readable medium comprising instructions which, when executed by a compute of a quantum key distribution (QKD) device (1), cause the computer to function as:
an authentication processing unit (11) that performs inter-QKD-device connection authentication indicating authentication processing with an opposing QKD device (1), and key manager (KM)-QKD connection authentication indicating authentication processing with an opposing KM device (2); and
a start unit (12) that enables a QKD function in a case where the inter-QKD-device connection authentication is successful and the KM-QKD connection authentication is successful.
